(19) Europäisches Patentamt
European Patent Office
Office européen des brevets

(11) **EP 4 601 184 A1**

(12) **EUROPEAN PATENT APPLICATION**

(43) Date of publication:
**13.08.2025 Bulletin 2025/33**

(21) Application number: 24382130.3

(22) Date of filing: **09.02.2024**

(51) International Patent Classification (IPC):
$H02P\ 9/00^{(2006.01)}$    $F03D\ 7/02^{(2006.01)}$
$H02J\ 3/38^{(2006.01)}$    $H02P\ 9/44^{(2006.01)}$

(52) Cooperative Patent Classification (CPC):
**H02P 9/007; F03D 7/0284; H02J 3/381; H02P 9/44**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Gamesa Renewable Energy
Innovation &
Technology S.L.
48170 Zamudio, Vizcaya (ES)**

(72) Inventor: **The designation of the inventor has not
yet been filed**

(74) Representative: **SGRE-Association
Siemens Energy Global GmbH & Co. KG
SE I IM P Intellectual Property
Siemenspromenade 9
91058 Erlangen (DE)**

(54) **WIND TURBINE AND METHOD FOR OPERATING A WIND TURBINE**

(57) The invention refers to a method for operating a wind turbine including an induction generator having a rotor and a stator. The method comprises the steps of: obtaining a grid voltage deviation and a grid frequency deviation from their rated values, and in response to such obtention, setting the rotor speed above its rated rotor speed, as a function of the obtained grid voltage and frequency deviations, so as to keep rotor current and stator current within their rated current values. The invention also refers to an induction generator for a wind turbine designed and/or configured to be operated in accordance with the previously defined method, and to a wind turbine incorporating said induction generator. The invention mitigates over dimensioning of wind turbines, mainly over dimensioning of their induction generators, so as to reduce the overall cost of the wind turbine.

FIG. 1

**Description**

TECHNICAL FIELD

The present invention relates to a method for operating a wind turbine under conditions of grid voltage and grid frequency deviations, with respect of their nominal values.

An object of the invention is to mitigate or avoid over dimensioning of wind turbines, mainly over dimensioning of their induction generators, in order to reduce overall cost of the wind turbine.

An additional object of the invention is to mitigate or avoid wind turbine power deratings, due to overheating of its components during grid voltage and frequency excursions.

The invention also refers to a wind turbine operated by the above-mentioned operation method.

STATE OF THE ART

Wind turbines are connected to an electrical utility grid which operates at a particular nominal voltage and a particular nominal frequency, such as 50 Hz or 60 Hz.

However, the actual voltage and frequency of a utility grid, due to imbalance of production of power and consumption of power, may deviate from their nominal values.

Grid operators are developing hard normative trying to secure the grid stability.

One of the key requirements that are being specified in the Grid Connection normative worldwide, refers to the grid voltage and frequency range of operation of wind turbines, fixing the necessity for them to remain connected to the grid when grid voltage excursions up to $\pm$10-12% and grid frequency excursions up to $\pm$6% occur.

Furthermore, wind turbines may be required to perform other control functions when the actual frequency deviates from the nominal grid frequency.

However, grid undervoltage and grid over-frequency causes higher currents on stator and rotor windings of induction generators, that increase components temperature and in consequence increase losses and reduce efficiency, thus, causing the necessity of over-dimensioning the electrical generator and/or converters for supporting such events, as the wind turbine control maintains the reference speed indeed during those events.

Consequently, conventional wind turbines are costly because they require heavier equipment and more expensive equipment, to be able to operate under grid voltage and frequency deviations ranges from their nominal values.

Other solutions that do not rely on over-dimensioning of the equipment, simply assume the risk of overheating of the components, which may have a negative impact on wind turbine availability to be connected to the grid, or damage of components in case those extreme scenarios are maintained for extended periods of time.

Therefore, there is a need for wind turbines and control methods thereof, that mitigate or avoid:

- over-cost of components due to over-dimensioning, mainly induction generators (squirrel cage type and Double-Fed Induction Generators, DFIG, type).

- wind turbine power deratings due to overheating of components, during voltage excursions maintained in time.

DESCRIPTION OF THE INVENTION

The invention is defined in the attached independent claims, and satisfactorily solves the above-described drawbacks of the prior art, by the provision of a method for operating a wind turbine which set the inductor generator rotor speed, as a function of a grid voltage deviation and a grid frequency deviation, wherein the grid voltage deviation is an under-voltage deviation, and the grid frequency deviation is an over-frequency deviation.

More in particular, an aspect of the invention refers to a method for operating a wind turbine, the wind turbine including an induction generator having a rotor and a stator. The method comprises the steps of: obtaining a grid voltage deviation and a grid frequency deviation from their rated or nominal values, and in response to such obtention, setting the rotor speed above its rated rotor speed, as a function of the obtained grid voltage and frequency deviations, so as to keep rotor current and stator current within their rated (nominal) current values.

The rated rotor current, the rated stator current, and the rated rotor speed, are those that correspond to the generation of nominal active and reactive power by the induction generator.

The above expression of obtaining a grid voltage deviation and a grid frequency deviation, should be interpreted broadly, for example the term obtaining may refer to receive or determine information relative to the grid voltage deviation and a grid frequency deviation.

For example, the step of obtaining a grid voltage deviation and a grid frequency deviation, may involve measuring grid voltage and grid frequency while the wind turbine is coupled to the grid, and comparing the measured grid voltage and grid frequency with rated grid voltage and rated frequency values.

The rotor speed is set to a magnitude determined based at least in part on the ratio ($F_d / V_d$) between the deviation magnitude of the grid frequency, and the deviation magnitude of the grid voltage, wherein said determined rotor speed magnitude is below a maximum permissible rotor speed, in order to prevent damage to the rotor of the induction generator. Preferably, the rotor speed is set to a magnitude proportional to the ratio (Fd / Vd).

If the determined rotor speed magnitude, exceeds the maximum permissible rotor speed, then the rotor speed is set to the maximum permissible rotor speed.

The rotor speed is set above its rated or nominal rotor speed, as long as the grid voltage and frequency deviations persist.

In a preferred embodiment of the invention, the induction generator is a Double-Fed Induction Generator, DFIG.

In a preferred implementation of the invention, the grid voltage deviation is within the range +/- 10 - 12 % of the nominal grid voltage, and the grid frequency deviation is within the range +/- 6% of the nominal grid frequency.

Another aspect of the invention, refers to an induction generator designed and/or configured to be operated in accordance with the method defined above.

Another aspect of the invention, refers to a wind turbine comprising one or more rotor blades, said blades attached to a hub, forming a wind rotor mounted to a nacelle which is in turn mounted on a tower. The wind turbine further comprises an induction generator operationally connected to the wind rotor for converting wind energy into electrical energy, wherein the induction generator is the one previously defined. The rotor speed can be varied by varying the pitch of the blades.

The invention also refers to a wind farm comprising a plurality of wind turbines, as the wind turbine previously defined.

Another aspect of the invention refers to a control system for controlling operation of a wind turbine. The control system comprises a control module, external or integrated within a main control module of the wind turbine. The control module is configured for: determining or retrieving, a grid voltage deviation data and a grid frequency deviation data, said data deviating from their rated values, and in response to such data determined or retrieved, sending instructions for setting the rotor speed above its rated rotor speed, as a function of the detected grid voltage and frequency deviations, so as to keep rotor current and stator current within their rated current values.

Still, another aspect of the invention refers to a non-transitory computer-readable storage medium storing instructions that, when executed by one or more processors, can be used for controlling a wind turbine. In particular, such instructions when executed by one or more processors, cause the processors to perform the operations of: sending instructions to set the rotor speed of the induction generator of the wind turbine, above its rated rotor speed, based at least in part on a detected or retrieved grid voltage data and a detected or retrieved frequency deviation data, said deviations taken from rated values, so as to keep rotor current and stator current within their rated current values.

Still, another aspect of the invention refers to a computer implemented method for optimizing the design of an induction generator of a wind turbine. The method comprises the steps of conducting a simulation scenario involving a simultaneous under-voltage deviation, and an over-frequency deviation, both parting from their rated values. Said simulation comprises the steps of:

- over speeding the generator to achieve a generator rotor speed above its rated rotational speed, wherein said generator rotor speed involves a magnitude which is based on the grid voltage deviation and the grid frequency deviation, such that the generator's current is maintained within substantially rated values as a result of the over speeding,
- determining a maximum permissible rotor speed that falls within established safety limits,
- sizing the induction generator based on the results of the simulated scenario.

BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:

Figure 1.- shows a flow chart illustrating the control method of the invention.

Figure 2.- shows a schematic representation of a wind turbine according to the invention.

PREFERRED EMBODIMENTS OF THE INVENTION

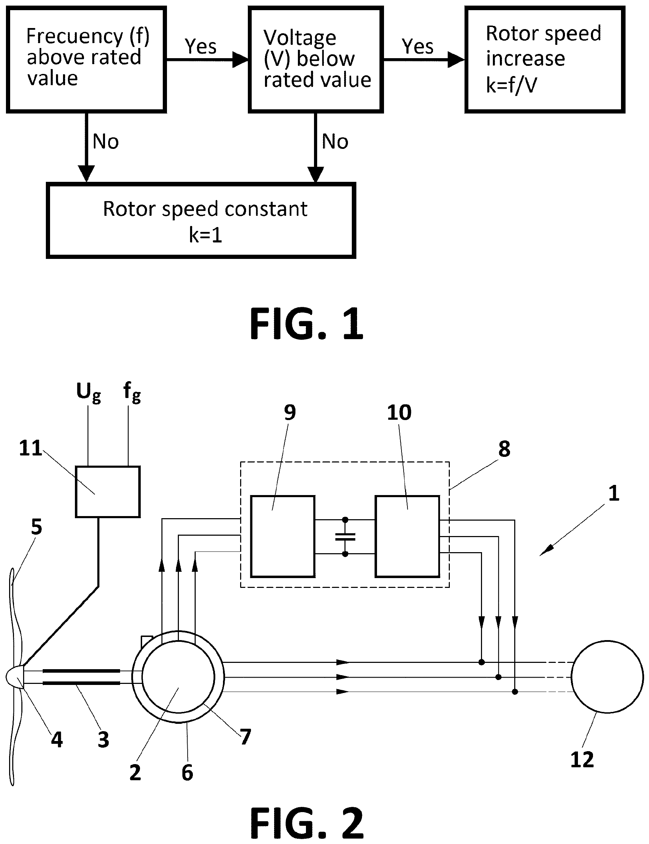

As represented in **Figure 1,** the invention provides an advantageous strategy for operating a wind turbine. While grid voltage and grid frequency are within their rated values, the rotor speed is maintained within its rated value, but it if grid voltage and grid frequency deviate from their rated values, then the internal control generator speed reference is set as a function of a grid voltage deviation (under-voltage situations) and grid frequency deviation (over-frequency situations), which is applicable only for rated or nominal conditions of Active Power (P) and Reactive Power (Q), that is, where design limits can be reached.

Commonly, Double-Fed Induction Generator, DFIG, are oversized to work permanently in the worst under-voltage scenario (-5%Un) and over-frequency scenario (+3%fn) in which the rotor and stator currents are over the rated value (currents at rated grid voltage Un and rated grid frequency fn) causing higher copper losses and consequently higher winding temperatures.

The present invention relies on realizing that if rotor and stator currents are kept at their rated values (those at rated grid voltage (Un) and rated grid frequency (fn)) when grid voltage goes under the rated value and grid frequency goes over the rated value, the size of the generator can be reduced or cooling system can be optimized (self ventilation. Etc.), improving the cost and efficiency of the induction generator.

For determining how stator and rotor currents can be kept at their rated values, when voltage goes under rated value and frequency goes over the rated value, the following calculations are performed:

Calculation of stator current (Is):

$$P_s = P_T \frac{n_s}{n}$$

$$P_s = \sqrt{3} U_g I_s \cos \varphi$$

$$I_s = \frac{P_T 60 f_g}{\sqrt{3}\, n\, U_g \cos \varphi} = \frac{60 P_T}{\sqrt{3} \cos \varphi} \frac{f_g}{n U_g}$$

At rated Pn / Qn, but undervoltage and over-frequency scenario if (Is) wants to be kept constant:

$$\frac{f_g}{n U_g} = cte = \frac{f_n}{n_n U_n}$$

For instance, if Ug=0.95Un and fg=1.03fn:

$$\frac{1.03 f_n}{n 0.95 U_n} = \frac{f_n}{n_n U_n}$$

$$n = \frac{1.03 n_n}{0.95} \approx 1.08 n_n$$

Therefore, stator current will stay at rated value if turning speed increases approximately 8% when stator voltage reduces 5% and grid frequency increases 3%.

Calculation of rotor current (Ir):

$$P_r = P_T\left(1 - \frac{n_s}{n}\right)$$

$$P_r = \sqrt{3}U_r I_r \cos\varphi = \sqrt{3}s\, rt\, U_g I_r \cos\varphi$$

$$I_r = \frac{P_T\left(1 - \frac{n_s}{n}\right)}{\sqrt{3}\left(\frac{n}{n_s} - 1\right) rt\, U_g \cos\varphi} = \frac{60 P_T f_g}{3\sqrt{3}\, rt\, U_g \cos\varphi\, n}$$

At rated Pn / Qn, but under-voltage and over-frequency scenario if (Ir) wants to be kept constant:

$$\frac{f_g}{nU_g} = cte = \frac{f_n}{n_n U_n}$$

For instance, if Ug=0.95Un and fg=1.03fn:

$$\frac{1.03 f_n}{n\, 0.95 U_n} = \frac{f_n}{n_n U_n}$$

$$n = \frac{1.03 n_n}{0.95} \approx 1.08 n_n$$

Variables definition:

Ps: stator active power output [kW]
Pr: rotor active power output [kW]
Pt: generator total active power output [kW]
$N_s$: synchronous speed [rpms]
n: rotor speed [rpms]
Ug: grid voltage [V]
$U_r$: rotor voltage [V]
$I_s$: stator current [A]
$I_r$: rotor current [A]
$f_g$: grid frequency [Hz]
$f_n$: rated frequency [Hz]
$n_n$: rated *speed [rpms]*
s: slip [-]
rt: ratio between the stator voltage and rotor voltage.

**Figure 2** shows a schematic representation of a wind turbine (1) according to the invention, which conventionally comprises a doubly-fed induction generator (2), driven by a shaft (3) coupled to a hub (4) fitted with blades (5). The generator (2) comprises stator windings (6) and rotor windings (7) connected to a converter (8), which typically includes an ac-dc converter (9) connected to a dc-ac converter (10) in turn connected to a utility grid (12).

The wind turbine (1) includes a control module (11) which receives data related to the grid voltage and to the grid frequency. The utility grid (10) is intended to be operated at a nominal voltage and frequency. however, due to disturbances or imbalances between power production and power consumption, the voltage and frequency of the utility grid may occasionally deviate from the nominal or rated values.

The control module (11) is adapted to determine or retrieve, a grid voltage deviation data and a grid frequency deviation data, and in response to such data determined or retrieved, sending instructions for setting the rotor speed above its rated rotor speed, as a function of the detected grid voltage and frequency deviations, so as to keep rotor current and stator current within their rated current values. The rotor speed is set by varying the blades pitch.

**Claims**

1. Method for operating a wind turbine including an induction generator having a rotor and a stator, the method comprising the steps of:

   obtaining a grid voltage deviation and a grid frequency deviation from their rated values, and
   in response to such obtention, setting the rotor speed above its rated rotor speed, as a function of the obtained grid voltage and frequency deviations, so as to keep rotor current and stator current within their rated current values.

2. Method according to claim 1, wherein the grid voltage deviation is an under-voltage deviation, and the grid frequency deviation is an over-frequency deviation.

3. Method according to claim 1 or 2, wherein the rotor speed is set to a magnitude determined based at least in part on the ratio ($F_d / V_d$) between the deviation magnitude of the grid frequency, and the deviation magnitude of the grid voltage, and wherein said determined rotor speed magnitude is below a maximum permissible rotor speed.

4. Method according to claim 3, wherein the rotor speed is set to a magnitude proportional to the ratio ($F_d / V_d$), wherein said determined rotor magnitude is below a maximum permissible rotor speed.

5. Method according to claim 3 or 4, wherein the rotor speed is set to the maximum permissible rotor speed when the determined rotor speed magnitude exceeds the maximum permissible rotor speed.

6. Method according to any of the preceding claims, wherein the rotor speed is set above its rated rotor speed, as long as the grid voltage and frequency deviations persist.

7. Method according to any of the preceding claims, wherein the induction generator is a Double-Fed Induction Generator, DFIG.

8. Method according to any of the preceding claims, wherein the step of obtaining a grid voltage deviation and a grid frequency deviation, involves measuring grid voltage and grid frequency while the wind turbine is coupled to the grid, and comparing the measured grid voltage and grid frequency with rated grid voltage and rated frequency values.

9. Method according to any of the preceding claims, wherein the grid voltage deviation is within the range +/- 10 - 12 % of the nominal grid voltage, and the grid frequency deviation is within the range +/- 6% of the nominal grid frequency.

10. Method according to any of the preceding claims, wherein the rated rotor current, the rated stator current, and the rated rotor speed, are those that correspond to the generation of nominal active and reactive power by the induction generator.

11. Method according to any of the preceding claims, wherein the rotor speed is set so as not to exceed the maximum permissible rotor speed, in order to prevent damage to the rotor of the induction generator.

12. Induction generator designed and/or configured to be operated in accordance with the method defined in any of the preceding claims.

13. A wind turbine, comprising one or more rotor blades, said blades attached to a hub, forming a wind rotor mounted to a nacelle which is in turn mounted on a tower, the wind turbine further comprising an induction generator operationally connected to the wind rotor for converting wind energy into electrical energy, wherein the induction generator is the one defined in claim 12, and wherein the rotor speed can be varied by varying the pitch of the blades.

14. A wind farm comprising a plurality of wind turbines according to claim 13.

15. A control system for a wind turbine, said control system comprising a control module, external or integrated within a main control module of the wind turbine, wherein said control module is configured for:

determining or retrieving, a grid voltage deviation data and a grid frequency deviation data, said data deviating from their rated values, and

in response to such data determined or retrieved, sending instructions for setting the rotor speed above its rated rotor speed, as a function of the detected grid voltage and frequency deviations, so as to keep rotor current and stator current within their rated current values.

# FIG. 1

# FIG. 2

Europäisches
Patentamt
European
Patent Office
Office européen
des brevets

# EUROPEAN SEARCH REPORT

**Application Number**

EP 24 38 2130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 018 609 B2 (SENVION GMBH [DE]) 25 May 2021 (2021-05-25) * the whole document * | 1-15 | INV. H02P9/00 F03D7/02 H02J3/38 H02P9/44 |
| X | US 2011/037262 A1 (KRUEGER THOMAS [DE]) 17 February 2011 (2011-02-17) * the whole document * | 1-15 | |
| A | MOHAMMADI EBRAHIM ET AL: "An electromechanical emulation-based study on the behaviour of wind energy conversion systems during short circuit faults", ENERGY CONVERSION AND MANAGEMENT, ELSEVIER SCIENCE PUBLISHERS, OXFORD, GB, vol. 205, 31 December 2019 (2019-12-31), XP085987589, ISSN: 0196-8904, DOI: 10.1016/J.ENCONMAN.2019.112401 [retrieved on 2019-12-31] * the whole document * | 1-15 | |

**TECHNICAL FIELDS SEARCHED (IPC)**

H02P
F03D
H02J

The present search report has been drawn up for all claims

| Place of search | Date of completion of the search | Examiner |
|---|---|---|
| Munich | 25 June 2024 | Fraïssé, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2130

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2024

| Patent document cited in search report | | Publication date | Patent family member(s) | | Publication date |
|---|---|---|---|---|---|
| US 11018609 | B2 | 25-05-2021 | CN | 110034577 A | 19-07-2019 |
| | | | DE | 102018000157 A1 | 11-07-2019 |
| | | | EP | 3512064 A1 | 17-07-2019 |
| | | | ES | 2923144 T3 | 23-09-2022 |
| | | | US | 2019214927 A1 | 11-07-2019 |
| US 2011037262 | A1 | 17-02-2011 | CN | 101994660 A | 30-03-2011 |
| | | | DE | 102009037238 B3 | 09-12-2010 |
| | | | DK | 2288016 T3 | 15-10-2012 |
| | | | EP | 2288016 A1 | 23-02-2011 |
| | | | ES | 2396306 T3 | 20-02-2013 |
| | | | US | 2011037262 A1 | 17-02-2011 |

EPO FORM P0459

For more details about this annex : see Official Journal of the European Patent Office, No. 12/82